(19)

**Europäisches Patentamt**

**European Patent Office**

**Office européen des brevets**

(11) **EP 4 686 958 A1**

(12) **EUROPEAN PATENT APPLICATION**

(43) Date of publication:
04.02.2026 Bulletin 2026/06

(21) Application number: 24192353.1

(22) Date of filing: 01.08.2024

(51) International Patent Classification (IPC):
$G01S\ 7/35^{(2006.01)}$ $\quad$ $G01S\ 13/42^{(2006.01)}$
$G01S\ 13/524^{(2006.01)}$ $\quad$ $G01S\ 13/58^{(2006.01)}$
$G01S\ 13/72^{(2006.01)}$ $\quad$ $G01S\ 13/536^{(2006.01)}$
$G01S\ 13/34^{(2006.01)}$

(52) Cooperative Patent Classification (CPC):
G01S 13/42; G01S 7/354; G01S 7/356;
G01S 13/536; G01S 13/726; G01S 13/343

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **Infineon Technologies AG**
**85579 Neubiberg (DE)**

(72) Inventor: **MELNIKOV, Alexandr**
**Tai Po, New Territories (HK)**

(74) Representative: **2SPL Patentanwälte PartG mbB**
**Landaubogen 3**
**81373 München (DE)**

(54) **RADAR DEVICE AND RADAR METHOD**

(57) The present disclosure proposes a radar device for quasi-static target detection. The radar device comprises a plurality of (e.g., N ≥ 2) receiver channels. Each receiver channel may correspond to an antenna element of an antenna array. Each receiver channel is configured to receive a received signal corresponding to reflections of transmitted radar chirps. The radar device comprises a processing circuit. The processing circuit is configured to, for each receiver channel and for each radar chirp, perform moving target detection (MTD) to produce an MTD signal. The processing circuit is configured to for each receiver channel and for each radar chirp, perform a spectral analysis of the MTD signal to generate a plurality of range bins. The processing circuit is configured to for each receiver channel and for each radar chirp, detect a target in a range bin based on a signal strength of the range bin. The processing circuit is further configured to determine an angle of arrival (AoA) for each detected target. The processing circuit is configured to cluster the detected targets according to their respective range and angle of arrival.

FIG. 2

EP 4 686 958 A1

## Description

### Field

The present disclosure generally relates to radar devices, and, more particularly to radar devices for resolving more than N quasi-static targets using an N-element antenna array.

### Background

Conventional linear antenna arrays with N ($N \geq 2$) antenna elements can only resolve N-1 static targets within the same range bin. While radar sensors with various antenna configurations can resolve multiple moving targets within the same range bin, provided they have distinct velocities and transmitted radar waveform allows sufficient Doppler resolution. However, the problem of resolving the targets with indistinguishable, given the Doppler resolution, velocities, remains constrained. This limitation arises from an antenna array's ability to form N-1 independent beams or spatial frequencies, which allows it to distinguish N-1 unique directions of arrival. Thus, with N elements, the array can effectively resolve up to N-1 static or quasi-static targets that are at the same range but have different angular positions.

Existing solutions propose increasing the number of antenna elements to improve static target resolution. However, this approach is fundamentally limited by the array's element count. Alternatively, enhancing Doppler resolution by increasing the number of chirps per frame and the frame rate can resolve more moving targets. However, this technique may significantly raise power consumption and computational demands. Furthermore, this technique requires distinct velocity profiles within the provided Doppler resolution.

A distinction between static, quasi-static, and moving targets primarily relates to their motion characteristics as observed by a radar device. Static targets are objects that do not move relative to the radar, and their position remains constant over time. Examples of static targets include buildings and other stationary infrastructure. Radar returns from static targets do not exhibit Doppler shifts, meaning their reflected signals have no frequency change caused by motion.

Quasi-static targets exhibit minimal or very slow movement, often having slight motions that can be considered negligible over short periods but may be detectable over longer periods.

Examples of quasi-static targets include humans standing still or sitting with minor movements like breathing, gently swaying branches, or objects vibrating slightly. The radar returns from quasi-static targets show very low Doppler shifts, and the minimal motion can sometimes be detected, especially with high-sensitivity radar systems, but these targets are often challenging to distinguish from static targets in short observation times.

Moving targets are objects that have significant motion relative to the radar, changing their position over time. Examples of moving targets include vehicles, flying aircraft, and walking or running humans. The radar returns from moving targets exhibit noticeable Doppler shifts, indicating the relative velocity between the radar and the target. The frequency change in the reflected signal is directly proportional to the speed of the target.

There may be a need to overcome limitations of radar device using linear antenna arrays in resolving quasi-static targets within the same range bin.

### Summary

This need is addressed by radar devices and radar methods in accordance with the appended claims.

According to a first aspect, the present disclosure proposes a radar device. The radar device comprises a plurality of (e.g., $N \geq 2$) receiver channels. Each receiver channel may correspond to an antenna element of an antenna array. Each receiver channel is configured to receive a received signal corresponding to reflections of transmitted radar chirps. The radar device further comprises a processing circuit. The processing circuit is configured to, for each receiver channel and for each radar chirp (of the frame), perform moving target detection (MTD) to produce an MTD signal. The processing circuit is configured to, for each receiver channel and for each radar chirp (of the frame), perform a spectral analysis (e.g., Discrete Fourier Transform (DFT), Fast Fourier Transform (FFT), Short-Time Fourier Transform (STFT), wavelet transform, etc.) of the MTD signal to generate a plurality of range bins. The processing circuit is configured to, for each receiver channel and for each radar chirp (of the frame), detect a target in a range bin based on a signal strength of the range bin. The processing circuit is configured to determine an angle of arrival (AoA) for the detected target. The processing circuit is configured to associate the detected target to a cluster according to their respective range and angle of arrival to discriminate between multiple targets associated with the same range bin. This process can be repeated for multiple frames.

The proposed radar device includes multiple receiver channels that capture signals reflected from transmitted radar chirps. A processing circuit in the device performs moving target detection (MTD) on the received signals from each channel and chirp to isolate moving objects. The circuit may then apply a Fast Fourier Transform (FFT) to the MTD processed signals to create a series of range bins, which help in determining the distance of detected targets. Targets are identified within these bins based on their signal strength, and their angles of arrival (AoA) are calculated. Detected targets are then clustered based on their range and AoA. An advantage of this approach is the enhanced ability to accurately detect and track multiple moving targets by combining range and directional information, improving overall target resolution and situational awareness

In some embodiments, the processing circuit is configured to identify a first target in a range bin and a second target different from the first target in the (same) range bin based on a first cluster associated with the range bin and a first AoA for the first target and based on a second cluster associated with the range bin and a second AoA for the second target. That is, the processing circuit may distinguish between two different targets within the same range bin by identifying separate clusters and angles of arrival (AoA) for each target. This means that even if two targets are at the same distance from the radar, the system can differentiate them based on their respective directions. This may lead to improved resolution and accuracy in target identification, allowing the radar system to effectively track multiple targets, enhancing its utility in complex environments.

In some embodiments, the processing circuit is configured to represent each detected target as a point in a multi-dimensional space. One axis of the multi-dimensional space represents the range and another axis of the multi-dimensional space represents the angle of arrival. The processing circuit may be configured to apply a clustering algorithm to group the points based on their proximity in said multi-dimensional space. That is, the processing circuit may represent each detected target as a point in a multi-dimensional space, with one axis for range and another for angle of arrival. It may then use a clustering algorithm to group these points based on their closeness in this space. In this way, a first cluster associated to a first target and a second cluster associated to a second target may be formed. This means the radar device may effectively organize and differentiate targets by considering both their distance and direction. An advantage of this approach is the enhanced ability to accurately group and track multiple targets in a cluttered environment, leading to improved situational awareness and target management.

In some embodiments, the processing circuit is configured to apply k-means clustering or Density-Based Spatial Clustering of Applications with Noise (DBSCAN) to cluster the detected targets. This means that the radar device may apply these algorithms to organize targets into clusters based on their range and angle of arrival. K-means clustering partitions targets into a predefined number of clusters by minimizing the variance within each cluster, while DBSCAN groups closely packed targets and identifies outliers. An advantage of using these clustering techniques is the improved accuracy and efficiency in differentiating and tracking multiple targets, even in the presence of noise and closely spaced objects.

In some embodiments, the processing circuit is configured to initialize one or more track based on initial clustering results from clustering the detected targets. Each cluster represents a potential target. The processing circuit may be configured to use a tracking algorithm to estimate and predict a state of each target, wherein a cluster's centroid represents the state for the tracking algorithm. Thus, the processing circuit may use initial clustering results to start tracking one or more targets, with each cluster representing a potential target. It may employ a tracking algorithm to estimate and predict each target's state, where the cluster's centroid may serve as a representative state for the tracking process. This means that the radar device can accurately monitor and forecast the movement of targets by treating each cluster as a distinct entity and using its centroid for continuous tracking. An advantage of this may be an enhanced ability to maintain precise and reliable target tracking over time, even as targets move, by leveraging the organized data from the clustering process.

In some embodiments, the processing circuit is configured to associate newly detected targets of a subsequent frame of radar chirps with existing tracks of at least one previous frame of radar chirps. The processing circuit may be configured to update the tracks based on the newly detected targets. That is, the processing circuit may link newly detected targets from a subsequent frame of radar chirps to existing tracks from previous frames. It may update these tracks based on the new target detections. This means the radar device may continuously refine and maintain target information over time by associating new data with previously identified targets. An advantage of this may be an improved accuracy and continuity in tracking targets, allowing for reliable monitoring of their movements and reducing the likelihood of losing track of targets between frames.

In some embodiments, the processing circuit is configured to associate the newly detected targets with existing tracks based on nearest neighbor, Joint Probabilistic Data Association (JPDA), or Multiple Hypothesis Tracking (MHT). That is, the processing circuit may use techniques like nearest neighbor, PDA, or MHT to match newly detected targets with existing tracks. This means the radar device may employ advanced algorithms to determine the best match between new target detections and previously tracked targets, ensuring accurate continuity in tracking. An advantage may be an enhanced reliability and precision in maintaining consistent target identification and tracking, even in complex environments with multiple moving objects.

In some embodiments, the processing circuit is configured to update clusters based on the updated tracks, wherein updating clusters comprises adding a newly detected targets to existing clusters, forming a new cluster based on newly detected targets, or removing a cluster if targets are no longer detected within said cluster. Thus, the processing circuit may adjust clusters based on the updated tracks. This may involve adding newly detected targets to existing clusters, creating new clusters if new targets are detected, or removing clusters if targets within them are no longer detected. This means the radar device may dynamically maintain and organize target information, ensuring that the clusters accurately reflect the current positions and movements of targets. An advantage may be an improved adaptability and accuracy in tracking multiple targets, as the device continuously updates and refines the clusters to reflect real-time changes in the environment.

In some embodiments, MTD comprises subtracting a receive signal of a previous frame from a receive signal of a subsequent frame of radar chirps. Thus, MTD may involve subtracting the received signal from a previous frame of radar chirps from the received signal of the current frame. This means that by comparing the two signals, the radar device can identify changes, effectively highlighting moving targets while suppressing stationary objects and noise. An advantage may be an enhanced ability to detect and focus on moving targets, improving the radar's effectiveness in dynamic environments. This process, also known as MTI (Moving Target Indicator), may be implemented using different techniques. MTI may be a 2-pulse canceller, where the signal from the previous frame is subtracted from the current frame. Alternatively, it may use a 3-pulse canceller, which involves subtracting the average of the signals from the two previous frames from the current frame. Another approach is to use an exponentially weighted average to determine the static clutter, where the received signals from multiple previous frames may be averaged with exponentially decreasing weights to emphasize recent data and de-emphasize older data.

In some embodiments, the processing circuit is configured to determine the AoA based on an FFT applied to the respective receive signals of the plurality of receiver channels. This means the radar device may analyze phase differences across the channels to calculate a direction from which the signals are arriving. An advantage may be a precise and efficient determination of the target's direction, enhancing the radar's overall accuracy in locating and tracking targets. Complex FFT spectra contain both magnitude and phase information. A technique referred to as phase monopulse may calculate the phase difference between signals from different antennas to determine the AoA. This method may be computationally efficient and effective for real-time applications. Capon's Minimum Variance Distortionless Response (MVDR) beamforming may involve calculating a covariance matrix of the received signals and applying an optimization algorithm to find weights that minimize a beamformer output power. This results in a narrow beam directed towards the target, providing high-resolution AoA estimates. Alternatively, the MUSIC ((Multiple Signal Classification)) algorithm may compute the eigenvalues and eigenvectors of the covariance matrix. The eigenvectors corresponding to the largest eigenvalues form a signal subspace, while the rest form a noise subspace. By scanning across possible angles and projecting the steering vectors onto the noise subspace, MUSIC may identify angles that correspond to peaks in the spectrum, indicating the directions of the targets.

In some embodiments, the radar chirps are Frequency-Modulated Continuous Wave (FMCW) radar chirps. The processing circuit may be configured to, for each receiver channel, mix the received signal with the transmitted frame of radar chirps to produce an intermediate frequency (IF) signal. This means the radar device may convert the received signal to a lower frequency, making it easier to analyze and extract range and velocity information. An advantage may be an improved accuracy in measuring distances and speeds of targets, as the IF signal simplifies the detection and processing of relevant data.

According to a further aspect, the present disclosure proposes a radar method. The method may be a computer-implemented method. The method includes receiving, via a plurality of receiver channels, a respective received signal corresponding to reflections of transmitted radar chirps. The method further includes, for each receiver channel and for each radar chirp, performing MTD to produce an MTD signal, performing a spectral analysis (e.g., FFT) of the MTD signal to generate a plurality of range bins, detecting a target in a range bin based on a signal strength of the range bin, determining an AoA for the detected target, and associating the detected target according to their respective range and AoA to discriminate between multiple targets associated with the same range bin. This process can be repeated for multiple frames.

Embodiments of the present disclosure propose to discriminate quasi-static targets, such as stationary humans or inanimate objects with minor movements, based on random short-term behaviors, accumulating enough observations over time to detect individual targets within the same range bin. Embodiments may use a chirp-wise processing approach with Moving Target Indicator (MTI) operations to highlight moving targets and apply clustering algorithms like k-means or DBSCAN for accurate tracking and distinguishing targets. Embodiments may enhance the radar's ability to detect and resolve multiple targets in dynamic environments by leveraging advanced signal processing techniques and clustering algorithms.

The proposed concept for distinguishing quasi-static targets within the same range bin relies on the assumption that although similar targets, such as two sitting people, may exhibit similar Doppler characteristics over the long term, their short-term behaviors are random and distinct due to different body movements, breathing rates, or heartbeats. When only one chirp is used, the radar detects the target with the dominant Doppler effect at that moment. However, by observing multiple chirps over an extended period, some chirps will predominantly capture information from one target, while others will capture information from the other. This variation allows for the identification of both targets based on which Doppler effect is dominant at each instance. By accumulating enough observations, it is possible to gather sufficient detections of each target. Processing these detections separately, without combining them into a single cluster, allows the recovery of angle of arrival (AoA) information for each individual target within the same range bin. An advantage of this concept is the ability to accurately resolve and track multiple quasi-static targets within the same range, enhancing target identification and monitoring capabilities.

**Brief description of the Figures**

Some examples of apparatuses and/or methods will be described in the following by way of example only, and with reference to the accompanying figures, in which

Fig. 1 schematically shows two quasi-static targets having the same range with respect to a radar device;

Fig. 2 shows a basic block diagram of a radar device in accordance with an embodiment of the present disclosure;

Fig. 3 illustrates a chirp-wise processing approach for the proposed radar device, detailing acts from data acquisition to target parameter estimation and clustering;

Fig. 4 shows a basic flowchart of a radar method in accordance with an embodiment of the present disclosure;

Fig. 5 illustrates a detailed signal processing pipeline for the proposed radar device, specifically focusing on the acts involved in processing a new frame of radar data to detect and cluster targets;

Fig. 6 illustrates a detailed signal processing pipeline for the proposed radar device, outlining the acts from raw ADC (Analog-to-Digital Converter) data acquisition to visualization of detected targets; and

Fig. 7 illustrates a result of target detection and clustering using the proposed radar device in an indoor office environment

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

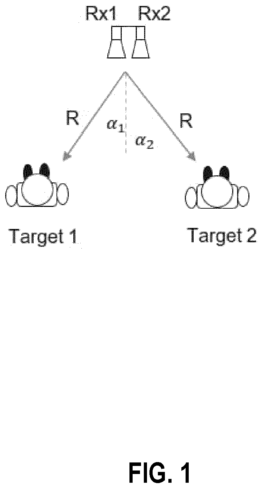

**Fig. 1** schematically shows two targets having the same range (R) with respect to a FMCW radar device, but different phase offsets ($\varphi_1$ and $\varphi_2$) due to different angular positions ($\alpha_1$ and $\alpha_2$). Both targets may have a different rate of change of phase due to micro-Doppler effect. In the illustrated example, two quasi-static people are considered. Their Doppler frequency only depends on breathing, heartbeat patterns and random body movements. Both targets are observed by a FMCW radar device with a linear antenna array consisting of two antenna elements only.

For antenna 1, the received signal in time domain may be expressed as

$$x_{Rx1} = A_1 \cos[2\pi f t + \varphi(\alpha_1) + \varphi_{D1}(t)] + A_2 \cos[2\pi f t + \varphi(\alpha_2) + \varphi_{D2}(t)],$$

where $A_1$ and $A_2$ denote amplitude of radar returns due to target 1 and target 2 respectively. $f$ denotes an instantaneous frequency of intermediate frequency (IF) signal $f = \dfrac{2BR}{c}$. $\varphi(\alpha_1)$ and $\varphi(\alpha_2)$ denote phase offsets due to the targets' angular position. $\varphi_{D1}$ and $\varphi_{D2}$ denote the targets' Doppler shift (notation $t$ to underline time dependence).

For antenna 1, the received signal in frequency domain (after range FFT) may be expressed as

$$X_{Rx1} = \left[M_1 e^{j\varphi(a_1)}\right] e^{j\varphi_{D1}(t)} + \left[M_2 e^{j\varphi(a_1)}\right] e^{j\varphi_{D2}(t)},$$

where the $M_x$ ($x = 1, 2$) terms denote a convolution between Fourier transforms of $A\cos(2\pi f t)$ terms and a spectral window.

A condition for resolving such two targets using only two antennas is an absolutely distinct (also continuous and constant) rate of change of Doppler phase ($\varphi_{Dx}(t)$). The other term $M_x e^{j\varphi(a_x)}$ is just a constant phase offset due to Direction of Arrival (DoA), containing no hint towards any spatial target discrimination (since there is no dependency on time). It is not possible for the two quasi-stationary targets (e.g., standing still or sitting still people) to have different velocities, only an initial phase of the Doppler shift within a frame of radar chirps can be different. However, this initial phase cannot be detected using Doppler analysis. We can only find the sum $[M_1 e^{j\varphi(a_1)}] + [M_2 e^{j\varphi(a_1)}]$, but not the original contributing terms.

Thus, Fig. 1 illustrates two targets at the same range from the FMCW radar device but with different phase offsets due to their distinct angular positions. These targets, considered quasi-static, exhibit Doppler frequencies influenced by minor movements such as breathing or heartbeat. The radar device, using an antenna array with two receiving antennas, captures signals that are a combination of returns from both targets. The received signal for antenna x ($x = 1, 2$) in the time domain is expressed as a sum of cosines with amplitudes and phase offsets corresponding to each target's angular position and Doppler shift. In the frequency domain, after applying a range FFT, the signal is a combination of terms involving the Doppler shifts and constant phase offsets due to the direction of arrival. To resolve the two targets with only two antennas would require these targets to have distinct and consistent Doppler phase changes. However, quasi-static targets, like stationary people, do not have different velocities, making it impossible to distinguish them based on Doppler shifts alone. The initial phase of the Doppler shift within a frame can be different, but this cannot be detected using Doppler analysis since the phases of the signals due to reflection from different objects are summed together and the initial summands cannot be recovered, leading to an inability to separate the contributions of each target.

The present disclosure can solve this issue. By using chirp-based signal processing and accumulating observations over multiple frames, for example, a radar device can capture variations in the Doppler effects of each quasi-static target over time. The present disclosure leverages randomness in short-term behaviors of quasi-static targets to gather enough distinct detections. Consequently, it may allow for the separation and identification of individual targets within the same range bin, even when conventional Doppler analysis fails to do so.

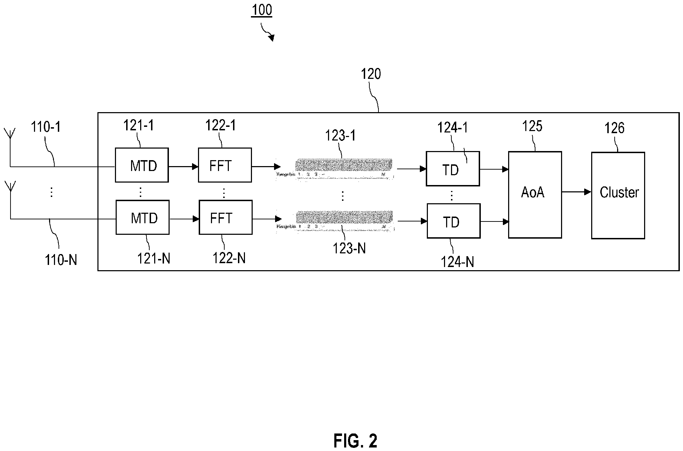

**Fig. 2** shows a basic block diagram of a radar device 100 in accordance with embodiments of the present disclosure.

Radar device 100 comprises a plurality of receiver channels 110-1 to 110-N ($N \geq 2$). Each receiver channel may correspond to an antenna element of an antenna array. A receiver channel in the context of a radar device may refer to a specific pathway through which the radar device receives and processes signals reflected from targets. Each receiver channel may be associated with a single antenna element in the antenna array. A receiver channel may include hardware and signal processing components necessary to handle the received radar signals. This may involve an antenna element, an RF front-end, an analog-to-digital converter (ADC), and digital signal processing (DSP). The antenna element is the physical part that captures the incoming radar signals, with each receiver channel having its corresponding antenna element. The RF front-end may include components that handle the highfrequency radar signals, such as amplifiers, mixers, and filters, preparing the signals for further processing by reducing noise and converting them to intermediate frequencies. The ADC may convert the analog radar signals into digital form, enabling them to be processed by the radar's digital signal processing unit.

The signals transmitted and reflected from targets can comprise radar chirps. A chirp in radar terminology refers to a signal in which the frequency may increase (up-chirp) and/or decrease (down-chirp) continuously over a certain period. A combination of up- and down-chirps may lead to triangular chirps. The period of this frequency sweep is known as chirp duration. Chirps may be used in Frequency-Modulated Continuous Wave (FMCW) radar devices to measure the distance and velocity of targets. When an FMCW radar device transmits a chirp, it travels through space and reflects off targets. The reflected chirp returns to the radar device with a time delay, corresponding to the distance to the target. The radar device may then compare the transmitted chirp with the received chirp. The difference in frequency between the two signals, known as the beat frequency, is proportional to the distance of the target. Additionally, if the target is moving, the Doppler effect will cause a frequency shift in the reflected chirp, allowing the radar device to measure the target's velocity. The combination of range and Doppler information may enable the radar device to determine both the position and speed of the target.

Radar chirps can be organized into frames to facilitate a structured transmission, reception, and processing of radar signals. A frame in radar terminology is a collection of multiple radar chirps transmitted sequentially over a specific period. The duration of a frame is determined by the number of chirps and the duration of each chirp. Inter-chirp delay and end-of-frame delay can significantly affect the detectable maximum unambiguous Doppler velocity.

Radar device 100 further comprises a (digital) processing circuit 120. Implementing processing circuit 120 may involve integrating both hardware and software components to efficiently process radar signals and extract useful information. For example, processing circuit 120 may comprises one or more of DSP chips, Field-Programmable Gate Arrays (FPGA), ASICs.

Processing circuit 120 is configured to, for each receiver channel 110-1 to 110-N and for each radar chirp of a current frame, perform moving target detection (MTD) 121-1 to 121-N to produce a respective MTD signal. MTD refers a radar signal processing technique used to identify and isolate moving targets from stationary background objects and clutter. MTD may include techniques like Moving Target Indicator (MTI), which is a specific method used within the broader MTD process. MTI is a technique designed to filter out stationary objects and highlight moving or quasi-static ones by exploiting the Doppler effect, which is the change in frequency of a wave in relation to an observer moving relative to the wave source.

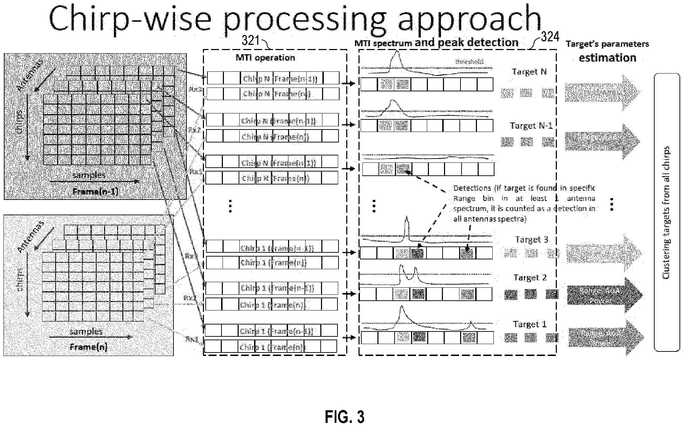

For each receiver channel 110-1 to 110-N and for each radar chirp of a current frame, MTD 121-1 to 121-N may comprise applying MTI filters to the respective received (digital) signals to separate static targets from moving or quasi-static ones. For example, this may be done by comparing respective radar chirps of consecutive frames. If an object is static, its reflected signal will be the same in each chirp or frame. If it is quasi-static, the signal may change between consecutive chirps. MTI may involve subtracting the receive signal of a previous frame from a receive signal of the current frame. This is schematically illustrated in MTI operation 321 shown in **Fig. 3**.

The left side of Fig. 3 shows collected data from multiple radar frames (previous Frame(n-1) and current Frame(n)) across several antenna channels (Rx1 to RxN). Each frame consists of multiple (N) chirps. Each chirp comprises a plurality of samples (fast time). "Fast time" refers to the time scale associated with sampling of the received signal within a single chirp. Fig. 3 illustrates an MTI operation 321 of radar device 100, showing how signals from consecutive chirps across multiple frames may be processed to detect moving targets.

MTI operation 321 may be applied to each pair of chirps from consecutive frames. Fig. 3 shows a series of chirps from two consecutive frames, Frame(n-1) and Frame(n). Each frame consists of multiple chirps labeled from chirp 1 to chirp N. Chirp N (Frame(n-1)) represents the last chirp in the previous frame (Frame(n-1)). Chirp N (Frame(n)) represents the last chirp in the current frame (Frame(n)). The same pattern repeats for other chirps down to chirp 1. For each chirp in Frame(n), the corresponding chirp from Frame(n-1) may be subtracted. For instance, chirp N from Frame(n) may be subtracted by chirp N from Frame(n-1). This subtraction process may help in identifying the changes between frames, highlighting moving targets while reducing the impact of stationary objects. This process may be done for each receiver channel. By comparing chirps from consecutive frames, the MTI operation 321 may detect temporal changes in the received signals, which are indicative of moving targets. Stationary targets, which do not change between frames, are effectively filtered out. Stationary signals will cancel out, leaving only the signals from quasi-static and moving targets. While the example of Fig. 3 shows a 2-pulse canceller MTI, where the signal from the previous frame is subtracted from the current frame, also other alternative MTI techniques could be used (e.g., 3-pulse canceller, exponentially weighted average, etc.).

In addition to MTI, moving target detection (MTD) 121-1 to 121-N may include other optional signal processing techniques to enhance moving target detection, such as clutter rejection to further reduce the impact of stationary objects and noise, or signal integration to improve detection reliability.

Turning back to Fig. 2, processing circuit 120 of radar device 100 is further configured to, for each receiver channel 110-1 to 110-N and for each radar chirp, perform a FFT 122-1 to 122-N of the MTD signal to generate a respective plurality of range bins 123-1 to 123-N. This means that the processing circuit 120 may perform a range FFT for each receiver channel 110-1 to 110-N and for each radar chirp (of the current frame n). A range FFT works by transforming the respective time-domain signal output from MTD block 121-1 to 121-N into frequency domain. This transformation may separate received signals based on their respective time delays, corresponding to different distances from the radar device. By applying the FFT, processing circuit 120 may, for each receiver channel 110-1 to 110-N and for each radar chirp, generate a series of range bins, each representing a specific distance interval.

Processing circuit 120 is further configured to, for each receiver channel 110-1 to 110-N and for each radar chirp, perform target detection (TD) 124-1 to 124-N in a range bin based on a signal strength of the range bin. This may allow processing circuit 120 to determine the distance of targets by identifying which range bins contain significant signal energy. For each receiver channel 110-1 to 110-N and for each radar chirp, processing circuit 120 may detect a target in a range bin by analyzing the signal strength within that bin. After performing the range FFT, each range bin represents a specific distance from the radar. The signal strength in each bin indicates the presence (or absence) of a target at that distance. Target detectors (TD) 124-1 to 124-N of the receiver channels 110-1 to 110-N may compare the signal strength in each range bin to a predefined detection threshold. If the signal strength exceeds this threshold, it may indicate the presence of a target. This process may involve monitoring the signal levels in each range bin and distinguishing actual targets from background noise and clutter based on their relative signal strengths. The stronger the signal in a range bin, the more likely it is that a target is present at the corresponding distance. This is schematically illustrated in target detection (TD) operation 324 of Fig. 3.

Fig. 3 shows detected targets corresponding to signal peaks above a threshold in FFT outputs for different antennas and different chirps of the current frame. If a target is found in a specific range bin for at least one antenna spectrum of the current chirp, it may be presumed to be present in all antenna spectra of the current chirp for the current frame. This may consolidate detections across multiple antennas (receiver channels) to ensure reliable target identification.

Turning back to Fig. 2, processing circuit 120 is further configured to perform angle of arrival (AoA) determination 125 for each detected target. For this purpose, processing circuit 120 may be configured to determine the AoA based on phase monopulse applied to complex FFT spectra of the respective receive signals of the plurality of receiver channels 110-1 to 110-N. Also other AoA calculation methods may be used, such as Capon, MUSIC etc. The process of AoA determination involves estimating the direction from which the radar signals are returning after reflecting off a target. Each receiver channel (110-1 to 110-N) captures the incoming radar signals. These signals are reflected off the targets and received by the antenna elements, creating a set of received signals across the different channels. The received signals from the antenna elements may be sampled and digitized. This may create a matrix of data where each row corresponds to the signal received by a specific antenna element, and each column represents the time samples of the received signal. To determine the AoA, the processing circuit 120 may apply a FFT to the received signals across the antenna elements. The FFT is performed along the spatial dimension, i.e., across the signals received by different antenna elements at a given time. The FFT converts the time-domain signals into the frequency domain, specifically into the spatial frequency domain. In this domain, different frequencies correspond to different angles of arrival. The peaks in the resulting frequency spectrum indicate the directions from which the signals are arriving. The processing circuit 120 may identify peaks in the spatial frequency spectrum. Each peak may correspond to a potential target's direction of arrival. The position of these peaks in the frequency domain is directly related to the AoA, which may be calculated using a relationship between the spatial frequencies and the physical arrangement of the antenna elements. For a linear array of antenna elements spaced d apart, the angle $\theta$ may be determined using the formula:

$$\theta = \arcsin\left(\frac{\lambda f_s}{2\pi d}\right)$$

where $\lambda$ is the wavelength of the radar signal and $f_s$ is the spatial frequency corresponding to the detected peak.

Processing circuit 120 is further configured to perform clustering 126 of the detected targets from all chirps of the current frame according to their respective range and AoA. An output of the clustering 126 is clusters of points. Clustering detected targets based on their respective range and AoA may involve grouping together target detections that are close to each other in both distance, direction, and optionally also power. The clustering unit 126 of processing circuit 120 may gather data on detected targets, including their range and AoA, from the earlier (upstream) stages (e.g., 124, 125) of processing circuit 120. Each target may be represented by its range (distance from the radar) and its AoA (direction from which the signal is received). Each detected target may be represented as a point in a multi-dimensional space. This space may have two dimensions: one for range and one for AoA. The coordinates of each point correspond to the range and AoA values of the detected target. The space may also have three dimensions: one for range, azimuth, and elevation. Alternatively, the space may also have four dimensions: one for range, azimuth, elevation, and power. In general, the space may have M dimensions.

The clustering unit 126 may select a clustering algorithm to group the detected targets. The clustering algorithm may use a distance metric to measure proximity between points (detected targets) in the multi-dimensional space. A common choice may be the Euclidean distance, which calculates the straight-line distance between two points in the range-AoA space. Example clustering algorithms include k-means clustering and Density-Based Spatial Clustering of Applications with Noise (DBSCAN).

k-means clustering involves partitioning the targets into k clusters, where each detected target is associated with the cluster with the nearest mean value of range and AoA. The algorithm initializes k cluster centroids randomly. Each detected target is assigned to the nearest centroid, forming k clusters. For subsequent radar frames, the centroids may be recalculated as the mean of all targets in the cluster. The process may repeat over a plurality of frames until the centroids no longer change significantly.

DBSCAN groups targets based on density. It identifies areas of high target density (clusters) and separates them from areas of low density (noise). The algorithm starts with an arbitrary target and retrieves all targets within a specified distance. If this number of targets is sufficient to form a cluster, they are labeled as part of the cluster. The process may be repeated for each detected target, expanding clusters as more points are found within the specified distance.

The processing circuit 120 may be configured to identify multiple quasi-static targets in the same range bin based on the previously formed clusters. The processing circuit 120 may be configured to identify a first target in a range bin and a second target different from the first target in the (same) range bin based on a first cluster associated with the range bin and a first AoA for the first target and based on a second cluster associated with the (same) range bin and a second AoA for the second target. This means that the processing circuit 120 may be capable of distinguishing and identifying multiple quasi-static targets located within the same range bin by using clustering techniques based on their respective AoA. Processing circuit 120 may detect quasi-static targets within a specific range bin, which represents a certain distance interval from the radar. In this context, both the first and second quasi-static targets are located within the same range bin, indicating they are at similar distances from the radar. Although the quasi-static targets are at the same distance, they have different AoAs. Processing circuit 120 may use a clustering algorithm to group detections within the range bin according to their AoA. Each cluster corresponds to detected targets with similar AoA values. By analyzing the clusters, the processing circuit can identify the first target as part of the first cluster with the first AoA and the second target as part of the second cluster with the second AoA. This may enable the radar device 100 to distinguish between multiple quasi-static targets that are at the same distance but coming from different directions.

For tracking targets over multiple frames, processing circuit 120 may be configured to initialize one or more tracks based on initial clustering results from the clustering algorithm. Each cluster represents a potential target. Processing circuit 120 may be configured to use a tracking algorithm to estimate and predict a state of each target, wherein a cluster's centroid represents the state for the tracking algorithm.

Processing circuit 120 may begin by using the initial clustering results (e.g., from frame 1) to set up tracks. In the context of radar systems, a track refers to the continuous monitoring and updating of the position and motion parameters of a detected target overtime. A track in radar terminology represents the trajectory of a detected target as it moves within the radar's field of view. It is created by continuously associating and updating the detected position of the target across multiple radar frames. Each track includes various parameters (e.g., position) that describe the state of the target at any given time

The clusters may be formed by grouping initially detected targets based on their range and AoA. Each cluster, which groups together detections that are close in both distance and direction, is assumed to represent a single potential target. Each cluster identified during the initial clustering process is treated as a potential target. This means that the processing circuit 120 may track the position and movement of these clusters over time, treating each cluster as an individual entity.

Processing circuit 120 may employ tracking algorithms to estimate and predict the state of each target. Example tracking algorithms may include Kalman filters, Extended Kalman Filters (EKFs), Unscented Kalman filters (UKF), or Particle Filters. These tracking algorithms may be used to refine the target's estimated position and predict its future position based on the current data. The centroid of each cluster represents the central point or average position of the detections within that cluster. This centroid may be used as the representative state of the target for the tracking algorithm. The state typically includes parameters such as position (range and AoA), velocity, and possibly other attributes. The tracking algorithm may use the centroid to continuously update the target's state by integrating new data (e.g., from subsequent frames) as it becomes available. It may estimate the current position and predict the future position of the target, helping to maintain an accurate and continuous track over time. Apart from the cluster centroids (mean), the clustering algorithm can provide the standard deviation for each cluster, which may facilitate the clusters-tracks association, when Kalman filter is used. The standard deviation value may provide information about the measurement (detection) noise, which may also be one of the parameters in Kalman filtering.

Processing circuit 120 may be configured to associate newly detected targets of a subsequent frame of radar chirps with existing tracks of at least one previous frame of radar chirps. Processing circuit 120 may be configured to update the tracks based on the newly detected targets. This refers to how the processing circuit 120 may manage and update the tracking of targets as new data is received. The processing circuit 120 receives new radar data from subsequent frames of radar chirps. These subsequent frames contain detections of targets that may include both previously detected targets and potentially new targets. The processing circuit 120 may associate these newly detected targets with existing tracks, which were established from at least one previous frame of radar chirps. This means the processing circuit 120 may identify which new detections correspond to targets it has already been tracking.

To perform the association, the processing circuit 120 may employ tracking algorithms such as Nearest Neighbor, Joint Probabilistic Data Association (JPDA), or Multiple Hypothesis Tracking (MHT). These algorithms analyze the new detections and determine the best matches with existing tracks based on parameters like position (range and AoA), velocity, and predicted movements

Once the newly detected targets are associated with existing tracks, processing circuit 120 may update these tracks with the new information. This may include refining the position, velocity, and other state parameters of the targets based on the most recent data. The updated tracks reflect the most current estimates of the targets' states, incorporating the latest detections to improve accuracy. Thus, processing circuit 120 may be configured to update clusters based on the updated tracks, wherein updating clusters comprises adding a newly detected targets to existing clusters, forming a new cluster based on newly detected targets, or removing a cluster if targets are no longer detected within said cluster.

Radar device 100 may implement a (computer-implemented) method for resolving multiple quasi-static targets.

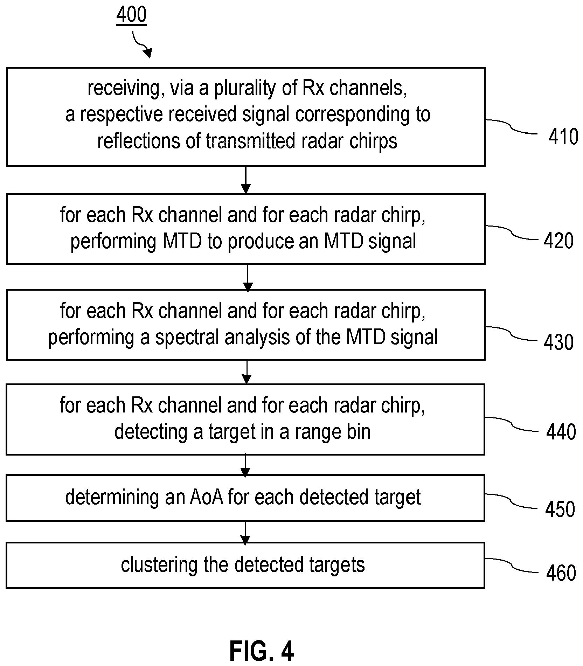

**Fig. 4** illustrates a basic flowchart of such a radar method 400 according to an embodiment of the present disclosure.

Method 400 includes receiving 410, via the plurality of receiver channels 110-1 to 110-N, a respective received signal corresponding to reflections of transmitted radar chirps. Method 400 further includes, for each receiver channel 110-1 to 110-N and for each radar chirp, performing MTD 420 to produce an MTD signal, performing an FFT 430 of the MTD signal to generate a plurality of range bins, detecting 440 a target in a range bin based on a signal strength of the range bin, determining 450 an AoA for each detected target, and clustering 460 the detected targets according to their respective range and AoA.

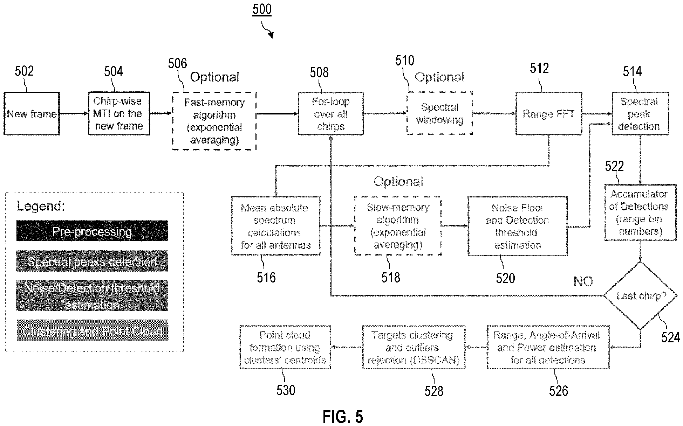

**Fig. 5** illustrates a more detailed signal processing flow 500 of method 400, specifically focusing on the acts involved in processing a new frame of radar chirps to detect and cluster targets.

At 502, the process begins with, for each of the plurality of receiver channels 110-1 to 110-N, an acquisition of a received signal comprising a new frame of radar data. This frame consists of multiple radar chirps.

At 504, the new frame undergoes, for each of the plurality of receiver channels 110-1 to 110-N, chirp-wise MTI processing. This act may involve subtracting the previous frame's signal from the current frame's signal for each chirp to highlight moving targets and suppress static clutter.

At 506, an optional fast-memory algorithm may apply an exponential averaging algorithm to the MTI-processed data for rapid noise reduction and signal enhancement across all chirps in the frame. A fast-memory algorithm, in the context of radar signal processing, typically refers to a method designed for rapid computation and efficient memory usage, often involving techniques like exponential averaging. However, specific details and implementation can vary based on the particular application and system design. In radar systems, such algorithms may be used for real-time processing with high-speed and low-latency operations. They may be used to quickly process large amounts of data, such as the radar returns from multiple chirps and frames, to filter noise, enhance signals, and extract useful information.

At 508, process 500 loops, for each of the plurality of receiver channels 110-1 to 110-N, over all chirps in the frame, performing the following steps for each receiver channel and each chirp:

- at 510, optional spectral windowing may apply a spectral window to the chirp data to reduce spectral leakage before performing the FFT. A spectral window function may be multiplied with the chirp data before performing the FFT. Common window functions include the Hamming, Hanning, Blackman, and Kaiser windows, for example.

- at 512, the FFT may be applied to the chirp data to convert the time-domain signals into the frequency domain, resulting in range bins for each chirp. Each range bin corresponds to a specific distance from the radar device 100.

- at 514, peaks in the range bins may be detected. These peaks indicate the presence of potential targets at specific ranges.

- between 512 and 514, a mean absolute spectrum may be calculated (optional) for each antenna at 516 to further refine the detection process and aid in noise reduction.

- at 518, another optional exponential averaging step may be applied, this time across a slower timescale to smooth the data over multiple frames, (e.g., to reduce a variance of the power spectrum or to increase the SNR)

- at 520, a noise floor may be estimated (optional) to determine a detection threshold. This act may help in distinguishing actual target signals from background noise.

- at 522, the detected peaks (targets) may be accumulated. If a target is found in a specific range bin by at least one antenna, it is presumed to be present in all antennas for the current chirp of the given frame.

At 524, process 500 may check if the current chirp is the last one in the frame. If not, it loops back to process the next chirp (508).

Once all chirps are processed, the process 500 may estimate the range, angle of arrival (AoA), and power for each detected target at 526.

At 528, the detected targets may be clustered using the Density-Based Spatial Clustering of Applications with Noise (DBSCAN) algorithm. This act may group the targets based on their range and AoA, and may identify and reject outliers.

At 530, a point cloud may be formed using the centroids of the clusters. Each cluster's centroid may represent the average position and characteristics of the grouped detections, providing a picture of the targets' locations and properties.

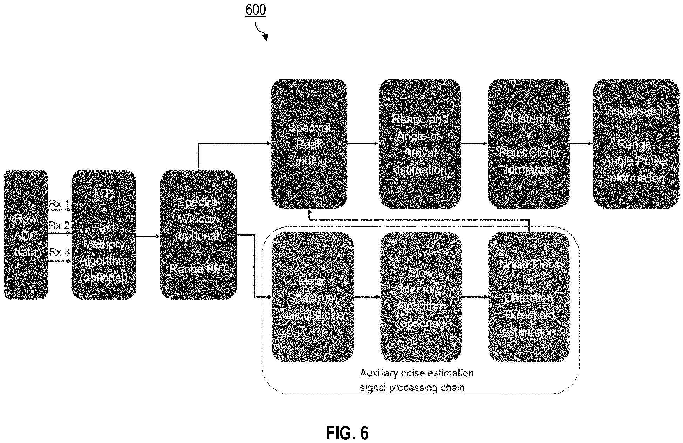

**Fig. 6** depicts a detailed signal processing pipeline 600 for radar device 100, outlining acts from raw ADC (Analog-to-Digital Converter) data acquisition to the visualization of detected targets with their range, angle, and power information. The illustrated diagram also includes an auxiliary noise estimation signal processing chain, which has been described with reference to Fig. 5.

The process begins with raw ADC data from multiple receiver channels (e.g., Rx 1, Rx 2, Rx 3). This data represents the digitized radar returns from the antenna elements. The next act involves processing the raw data to highlight moving targets by subtracting signals from consecutive frames or chirps, effectively reducing static clutter through the Moving Target Indicator (MTI) process. An optional act applies a rapid noise reduction and signal enhancement technique, using exponential averaging, referred to as the Fast Memory Algorithm.

The processed data then optionally undergoes a spectral windowing step to reduce spectral leakage, smoothing the edges of the signal before the Fast Fourier Transform (FFT). The Range FFT converts the time-domain data to the frequency domain, resulting in range bins that correspond to specific distances from the radar. The next step is spectral peak finding, where peaks in the frequency domain data obtained from the FFT are identified, indicating the presence of targets at specific ranges.

Range AoA estimation follows, where the distance to each detected target is determined based on the position of the spectral peaks, and the direction from which each target signal arrives is estimated using the phase differences between signals received at different antennas.

The detected targets are then clustered based on their range and AoA into groups, identifying distinct targets and filtering out noise or spurious detections. This clustering process may lead to the formation of a point cloud representation using the centroids of the clusters, providing a spatial map of detected targets. A final act may visualize the detected targets, presenting their range, angle of arrival, and power information, giving a comprehensive view of the target environment.

The auxiliary noise estimation signal processing chain begins after the FFT with calculating a mean spectrum for all receiver channels, providing an averaged representation of the frequency domain data. This act may help in estimating the noise floor and understanding the general signal environment. An optional slow memory algorithm may apply a slower, more comprehensive averaging technique, such as exponential averaging over longer periods, to further smooth the spectrum and reduce noise. This may lead to noise floor estimation, determining the baseline noise level in the radar data, which is crucial for setting detection thresholds. The detection threshold estimation may dynamically adjust the thresholds for detecting targets based on the estimated noise floor, distinguishing them from background noise and/or considering a desired Probability of False Alarm (PFA).

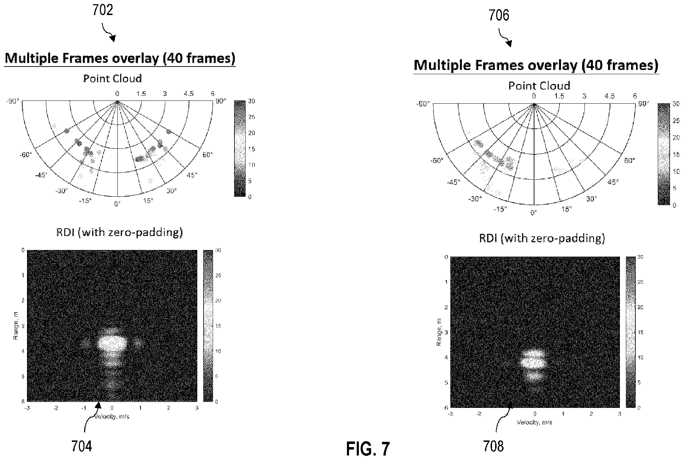

Fig. 7 illustrates a result of target detection and clustering using radar device 100 in an indoor office environment. Example radar settings are 10 frames per second (FPS), 3 Rx channels, 16 chirps/frame, 64 samples/chirp, 500 MHz bandwidth → resolution (distance per range bin = 30 cm), memory length (for point cloud): 4 seconds (detections from the past 40 frames are overlaid on the 2D map), point cloud processing is done without zero-padding, Range-Doppler Image (RDI) is constructed with zero-padding factor of 8.

Top-left image 702 shows a point cloud successfully resolving two standing people within the same range bin. Bottom-left image 704 shows a corresponding RDI only showing a single object with 0 m/s Doppler velocity at ~3.8 m. Top-right image 706 shows a point cloud successfully resolving two sitting people within the same range bin. Bottom-right image 708 shows a corresponding RDI only showing a single object with -0.05 m/s Doppler velocity at ~4.2 m.

The present disclosure relates to a radar device and method for resolving multiple quasi-static targets using an N-element antenna array. Traditional radar systems struggle to distinguish between multiple static targets within the same range bin due to limitations in the number of independent beams or spatial frequencies they can form. The present disclosure addresses these limitations by introducing a radar device with multiple receiver channels, each corresponding to an antenna element, and a processing circuit that performs chirp-wise moving target detection (MTD) and chirp-wise Fast Fourier Transform (FFT) on received signals. The device chirp-wise detects targets based on signal strength within range bins and calculates the angle of arrival (AoA) for each detected target. Detected targets are then clustered according to their range and AoA using algorithms such as k-means or DBSCAN. This approach allows the radar device to accurately resolve and track multiple quasi-static targets within the same range bin, enhancing target identification and monitoring capabilities in complex environments.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. A radar device (100), comprising

   a plurality of receiver channels (110), wherein each receiver channel (110) is configured to receive a received signal corresponding to reflections of a transmitted frame of radar chirps;
   a processing circuit (120) configured to,
   for each receiver channel (110) and for each radar chirp,

   perform moving target detection, MTD, (121) to produce an MTD signal;
   perform a spectral analyis (122) of the MTD signal to generate a plurality of range bins;
   detect a target (124) in a range bin based on a signal strength of the range bin;

   determine an angle of arrival, AoA, (125) for the detected target; and
   associate the detected target (126) of the frame of radar chirps to a cluster according to its range and angle of arrival to discriminate between multiple targets associated with the same range bin.

2. The radar device (100) of claim 1, wherein the processing circuit (120) is configured to identify a first target in a range bin and a second target different from the first target in the range bin based on a first cluster associated with the range bin and a first AoA for the first target and based on a second cluster associated with the range bin and a second AoA for the second target.

3. The radar device (100) of claim 1 or 2, wherein the processing circuit (120) is configured to

   represent each detected target of the frame of radar chirps as a point in a multi-dimensional space, where one axis represents the range and another axis represents the angle of arrival, and
   apply a clustering algorithm to group the points based on their proximity in said multi-dimensional space to form a first cluster associated to a first target and a second cluster associated to a second target.

4. The radar device (100) of claim 3, wherein the processing circuit (120) is configured to apply k-means clustering or Density-Based Spatial Clustering of Applications with Noise, DBSCAN, to cluster the detected targets.

5. The radar device (100) of any one of the previous claims, wherein the processing circuit (120) is configured to

   initialize one or more tracks based on initial clusters, wherein each cluster represents a potential target, and

use a tracking algorithm to estimate and predict a state of each target, wherein a cluster's centroid represents the state for the tracking algorithm.

6. The radar device (100) of claim 5, wherein the processing circuit (120) is configured to

associate newly detected targets of a subsequent frame of radar chirps with existing tracks of at least one previous frame of radar chirps, and
update the tracks based on the newly detected targets.

7. The radar device (100) of claim 6, wherein the processing circuit (120) is configured to associate the newly detected targets with existing tracks based on nearest neighbor, Joint Probabilistic Data Association (JPDA), or Multiple Hypothesis Tracking (MHT).

8. The radar device (100) of claim 6 or 7, wherein the processing circuit (120) is configured to update clusters based on the updated tracks, wherein updating clusters comprises

adding newly a detected target to an existing cluster,
forming a new cluster based on newly detected targets, or
removing a cluster if targets are no longer detected within said cluster.

9. The radar device (100) of any one of the previous claims, wherein MTD (121) comprises subtracting a receive signal of a previous frame from a receive signal of a subsequent frame of radar chirps.

10. The radar device (100) of any one of the previous claims, wherein the processing circuit (120) is configured to determine the AoA based on a Fourier transform applied to the respective receive signals of the plurality of receiver channels.

11. The radar device (100) of any one of the previous claims, wherein the radar chirps are Frequency-Modulated Continuous Wave, FMCW, radar chirps, and
the processing circuit (120) is configured to,

for each receiver channel (110),
mix the received signal with the transmitted frame of radar chirps to produce an intermediate frequency, IF, signal.

12. A radar method (400), comprising

receiving, via a plurality of receiver channels, a respective received signal corresponding to reflections of transmitted radar chirps;
for each receiver channel and for each radar chirp,

performing MTD to produce an MTD signal,
performing a spectral analysis of the MTD signal to generate a plurality of range bins,
detecting a target in a range bin based on a signal strength of the range bin;

determining an AoA for the detected target; and
associating the detected target to a cluster according to their respective range and

AoA to discriminate between multiple targets associated with the same range bin.

FIG. 1

FIG. 2

FIG. 3

<u>400</u>

```
┌─────────────────────────────────────────┐
│   receiving, via a plurality of Rx channels,    │
│   a respective received signal corresponding to  │── 410
│   reflections of transmitted radar chirps       │
└─────────────────────────────────────────┘
                    │
                    ▼
┌─────────────────────────────────────────┐
│   for each Rx channel and for each radar chirp,  │
│   performing MTD to produce an MTD signal       │── 420
└─────────────────────────────────────────┘
                    │
                    ▼
┌─────────────────────────────────────────┐
│   for each Rx channel and for each radar chirp,  │
│   performing a spectral analysis of the MTD signal│── 430
└─────────────────────────────────────────┘
                    │
                    ▼
┌─────────────────────────────────────────┐
│   for each Rx channel and for each radar chirp,  │
│   detecting a target in a range bin             │── 440
└─────────────────────────────────────────┘
                    │
                    ▼
┌─────────────────────────────────────────┐
│   determining an AoA for each detected target    │── 450
└─────────────────────────────────────────┘
                    │
                    ▼
┌─────────────────────────────────────────┐
│   clustering the detected targets               │── 460
└─────────────────────────────────────────┘
```

**FIG. 4**

FIG. 5

600

| | | | Spectral Peak finding | Range and Angle-of-Arrival estimation | Clustering + Point Cloud formation | Visualisation + Range-Angle-Power information |

Raw ADC data → Rx 1, Rx 2, Rx 3 → MTI + Fast Memory Algorithm (optional) → Spectral Window (optional) + Range FFT

Mean Spectrum calculations → Slow Memory Algorithm (optional) → Noise Floor + Detection Threshold estimation

Auxiliary noise estimation signal processing chain

FIG. 6

702

**Multiple Frames overlay (40 frames)**

Point Cloud

RDI (with zero-padding)

704

706

**Multiple Frames overlay (40 frames)**

Point Cloud

RDI (with zero-padding)

708

**FIG. 7**

Europäisches
Patentamt
European
Patent Office
Office européen
des brevets

# EUROPEAN SEARCH REPORT

**Application Number**

EP 24 19 2353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 001 960 A1 (INFINEON TECHNOLOGIES AG [DE]) 25 May 2022 (2022-05-25) <br> * figures 1,3 * <br> * paragraph [0016] * <br> * paragraph [0018] - paragraph [0019] * <br> * paragraph [0041] - paragraph [0049] * <br> * paragraph [0054] - paragraph [0056] * <br> * paragraph [0069] * <br> * paragraph [0095] * <br> ----- | 1-12 | INV. <br> G01S7/35 <br> G01S13/42 <br> G01S13/524 <br> G01S13/58 <br> G01S13/72 <br> G01S13/536 <br> G01S13/34 |
| Y | EP 4 365 623 A1 (INFINEON TECHNOLOGIES AG [DE]) 8 May 2024 (2024-05-08) <br> * paragraph [0036] * <br> ----- | 1-12 | |
| Y <br><br> A | EP 3 992 661 A1 (INFINEON TECHNOLOGIES AG [DE]; UNIV FRIEDRICH ALEXANDER ER [DE]) 4 May 2022 (2022-05-04) <br> * figures 1,3 * <br> * paragraph [0019] - paragraph [0020] * <br> * paragraph [0042] - paragraph [0046] * <br> ----- | 1,12 <br><br> 2-11 | |
| A | KIMOTO HAJIME ET AL: "Target Direction Estimation Characteristics of Capon Algorithm in MIMO Radar", 2019 INTERNATIONAL SYMPOSIUM ON ANTENNAS AND PROPAGATION (ISAP), ANTENNA BRANCH OF CHINESE INSTITUTE OF ELECTRONICS, 27 October 2019 (2019-10-27), pages 1-2, XP033692080, [retrieved on 2020-01-17] * the whole document * <br> ----- | 9 | **TECHNICAL FIELDS SEARCHED (IPC)** <br><br> G01S |

The present search report has been drawn up for all claims

| Place of search | Date of completion of the search | Examiner |
|---|---|---|
| Munich | 7 January 2025 | Töpfer, Nils-Peter |

EPO FORM 1503 03.82 (P04C01)

## ANNEX TO THE EUROPEAN SEARCH REPORT
## ON EUROPEAN PATENT APPLICATION NO.

EP 24 19 2353

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2025

| Patent document cited in search report | | Publication date | Patent family member(s) | | Publication date |
|---|---|---|---|---|---|
| EP 4001960 | A1 | 25-05-2022 | CN | 114545389 A | 27-05-2022 |
| | | | EP | 4001960 A1 | 25-05-2022 |
| | | | US | 2022155434 A1 | 19-05-2022 |
| EP 4365623 | A1 | 08-05-2024 | CN | 117991255 A | 07-05-2024 |
| | | | EP | 4365623 A1 | 08-05-2024 |
| | | | US | 2024151843 A1 | 09-05-2024 |
| EP 3992661 | A1 | 04-05-2022 | CN | 114442088 A | 06-05-2022 |
| | | | EP | 3992661 A1 | 04-05-2022 |
| | | | US | 2022137181 A1 | 05-05-2022 |

EPO FORM P0459

For more details about this annex : see Official Journal of the European Patent Office, No. 12/82